(19) Europäisches Patentamt
European Patent Office
Office européen des brevets

(11) Veröffentlichungsnummer : **0 100 831**
**B1**

# (12) EUROPÄISCHE PATENTSCHRIFT

(45) Veröffentlichungstag der Patentschrift : **15.04.87**

(51) Int. Cl.⁴ : **G 01 F 9/00**, G 01 F 9/02

(21) Anmeldenummer : **83105331.9**

(22) Anmeldetag : **30.05.83**

## (54) Vorrichtung zur Kraftstoffverbrauchsmessung von Fahrzeugen auf einem Rollenprüfstand.

(30) Priorität : **02.06.82 HU 177582**

(43) Veröffentlichungstag der Anmeldung : **22.02.84 Patentblatt 84/08**

(45) Bekanntmachung des Hinweises auf die Patenterteilung : **15.04.87 Patentblatt 87/16**

(84) Benannte Vertragsstaaten : **AT BE CH DE FR GB IT LI LU NL SE**

(56) Entgegenhaltungen :
**EP-A- 0 008 927**
**DE-A- 1 548 892**
**DE-A- 1 817 046**
**DE-A- 2 229 351**
**DE-A- 2 457 693**
**DE-A- 2 903 682**
**US-A- 3 983 372**

(73) Patentinhaber : **Közlekedéstudományi Intézet**
**Thán Károly u. 3/5**
**Budapest 1119 (HU)**

(72) Erfinder : **Flamisch, Otto, Dr.**
**Aradi u. 32**
**1062-Budapest (HU)**
Erfinder : **Laszlo, Arpád**
**Radna u. 7**
**1026-Budapest (HU)**

(74) Vertreter : **Bardehle, Heinz, Dipl.-Ing. et al**
**Patent- und Rechtsanwälte Bardehle-Pagenberg-Dost-Altenburg & Partner Galileiplatz 1 Postfach 86 06 20**
**D-8000 München 86 (DE)**

**EP 0 100 831 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung und ein Verfahren zur Kraftstoffverbrauchsmessung von Fahrzeugen auf einem Rollenprüfstand.

Zur Bewertung der energetischen Eignung von Fahrzeugen wird allgemein der auf eine Wegeinheit der zurückgelegten Wegstrecke bezogene Kraftstoffverbrauch benutzt. Verbrauchsmessungen mit solchem Ziel wurden früher zur wirksamen Vergleichbarkeit (Bewertbarkeit) — bei horizontalen Wegstrecken, bei verschiedenen konstanten Betriebsgeschwindigkeiten und bei bestimmten Wetterbedingung — auf Verkehrsstraßen durchgeführt. In den letzten Jahren hat sich der Verkehr dermaßen vergrößert, daß die durch die Wetterbedingungen ansonsten bereits begrenzte Verbrauchsmessung auf Verkehrsstraßen heute nicht mehr realisierbar ist. Demgegenüber ist im Interesse der rationellen Verwendung des auf der Basis von Kohlenwasserstoff beruhenden Kraftstoffes eine regelmäßige energetische Bewertung der Fahrzeuge erforderlich. Dazu ist eine von den Wetterbedingungen bzw. von äußeren Umständen unabhängig funktionierende, in einem geschlossenen Raum unterbringbare, eine kurze Meßzeit beanspruchende Vorrichtung mit hoher Meßgenauigkeit erforderlich.

Die oben geschilderte, von äußeren Bedingungen unabhängig funktionierende Kraftstoffverbrauchsmessung kann auf Fahrzeug-Rollenprüfständen realisiert werden, zweckmäßig mit Anwendung eines solchen Prüfstandes, welcher in der Lage ist, die zu den auszuwertenden gewünschten Motorbetriebszuständen gehörenden einzelnen Belastungswerte während der Zeiträume der Verbrauchsmessung konstant zu halten.

Die Genauigkeit der bekannten, auf einem mit Meßgefäßen ausgestatteten Fahrzeugprüfstand durchgeführten Kraftstoffverbrauchsmessung wird durch die Ausführung der die Kraftstoffmenge messenden und auswertenden Konstruktionen, deren Funktion und deren Verbindung mit dem Fahrzeugmotor beeinflußt. Darüber hinaus kann ein während einer relativ langen Meßzeit (z. B. 5 Minuten) nicht entsprechend konstant gehaltener Motorbetriebszustand (ansonsten würde man integrierte Ergebnisse erhalten) oder eine niedrigere Temperatur als die Motorbetriebstemperatur die Meßgenauigkeit verändern. Außerdem könnte nur ein solches Kraftstoffmengenmeßgerät benutzt werden, welches während der Meßzeit den Druck, der sich in der gemischbildenden Einrichtung des Motors (Vergaser, bzw. Einspritz-Pumpe) bildet, nachweisbar nicht verändert. Die zur Zeit angewandten Meßgefäße und andere Vorrichtungen erfüllen die aufgezählten Bedingungen nicht, so daß die Genauigkeit der Messungen nicht annehmbar ist und zur Automatisierung keine Möglichkeit besteht, so daß das Bedienungspersonal bedeutende manuelle Arbeiten leisten muß.

Auf dem Rollenprüfstand ist die Anwendung von mit Meßrollen kombinierten Lichtschrankenweg-Impulsgebern weit verbreitet, welche bei jedem Umlauf der Meßrolle ein elektrisches Signal abgeben. Daraus wird die Drehzahl des mit der Meßrolle in Verbindung stehenden angetriebenen Rades des geprüften Fahrzeuges bestimmt, d. h. der « zurückgelegte Weg », woraus danach bei bekanntem verbrauchtem Kraftstoffvolumen (insgesamt 500 $cm^3$) der Verbrauch pro Weg berechnet wird.

Wie aus obigem auch hervorgeht, dauert die Messung zusätzlich zu den bereits erwähnten Mängeln zu lange, was den Nachteil hat, daß während dieser Zeit ein stationärer Betriebszustand nicht aufrechterhalten werden kann.

Aus der DE-A-1 817 046 ist ein automatischer Digital-Brennstoffzähler für Kraftfahrzeuge bekannt. Dieser besitzt eine Umwandlungseinheit, in der Binärimpulse, die aus einem Wegstreckenzähler stammen und die einem bestimmten Wegabschnitt entsprechen, eine Torschaltung öffnen und schließen, durch die zweite Impulse durchgehen, die aus einem Brennstoffzähler stammen. Die Zahl der Impulse des Brennstoffzählers wird angezeigt und gibt bei entsprechend gewählten Chargengrößen, die den Brennstoffimpulsen zugeordnet sind, und entsprechend gewählter Wegstreckenlänge den Kraftstoffverbrauch direkt in l/100 km an. Der Brennstoffzähler wird in Serien-Kraftfahrzeugen eingebaut, um dem Fahrer zu beliebiger Zeit und in allen Betriebsbedingungen, z. B. Fahrt in der Stadt oder auf Landstraßen, im Sommer und Winter oder bei verschiedenen Fahrweisen, den Kraftstoffverbrauch anzuzeigen. Die Genauigkeit des Brennstoffzählers ist dem Verwendungszweck angepaßt und deswegen relativ gering. Das mit dieser Vorrichtung durchgeführte Meßverfahren läuft wie folgt ab : Bei Betätigen einer Lösch- und Startschaltung wird die Anzeige gelöscht und das System in seine Anfangsstellung gebracht. Durch einen in einem Umrechnungssystem verarbeiteten Wegstreckenimpuls wird die Torschaltung geöffnet. Nach Ablauf einer bestimmten Wegstrecke wird die Torschaltung durch einen weiteren Impuls aus dem Umrechnungssystem geschlossen. Solange die Torschaltung geöffnet ist, zählt ein Zähler die durch die Torschaltung tretenden Brennstoffimpulse und zeigt den Verbrauch auf dem Zähler in l/100 km an. Nach Ablauf einer bestimmten Wegstrecke verriegelt sich das System selbst. Eine erneute Messung kann erst nach wiederholtem Ansprechen der Löschund Startschaltung erfolgen.

Aus der DE-A-1 548 892 ist die Verwendung einer Vorrichtung zur Messung des spezifischen Treibstoffverbrauchs auf einem Rollenprüfstand bekannt. Hierbei vermindert sich der Kraftstoffpegel in einem Meßglas, während das Kraftfahrzeug das Zurücklegen einer Wegstrecke auf dem Prüfstand simuliert. Am Ende dieser Wegstrecke kann der spezifische Verbrauch auf dem Meßglas direkt abgelesen werden.

Aufgabe der Erfindung ist, eine solche Lösung zur Messung des Kraftstoffverbrauchs auf einem Rollenprüfstand zu schaffen, welche in verhältnismäßig kurzer Zeit unter Ausschluß der durch manuellen Eingriff und nicht konstanten Betrieb bedingten Fehlermöglichkeiten eine wesentlich genauere Messung ermöglicht als die bekannten Vorrichtungen.

Diese Aufgabe wird durch die im Anspruch 1 angegebene Vorrichtung sowie durch das im Anspruch 5 angegebene Verfahren gelöst.

Weitere vorteilhafte Ausgestaltungen der erfindungsgemäßen Vorrichtung finden sich in den abhängigen Ansprüchen 2 bis 4.

Die Erfindung wird anhand der Zeichnung näher erläutert, welche zwei erfindungsgemäße Ausführungsbeispiele darstellt.

Es zeigen :

Figur 1 Ein Blockschema des ersten erfindungsgemäßen Ausführungsbeispieles

Figur 2 Ein Blockschema des zweiten erfindungsgemäßen Ausführungsbeispieles.

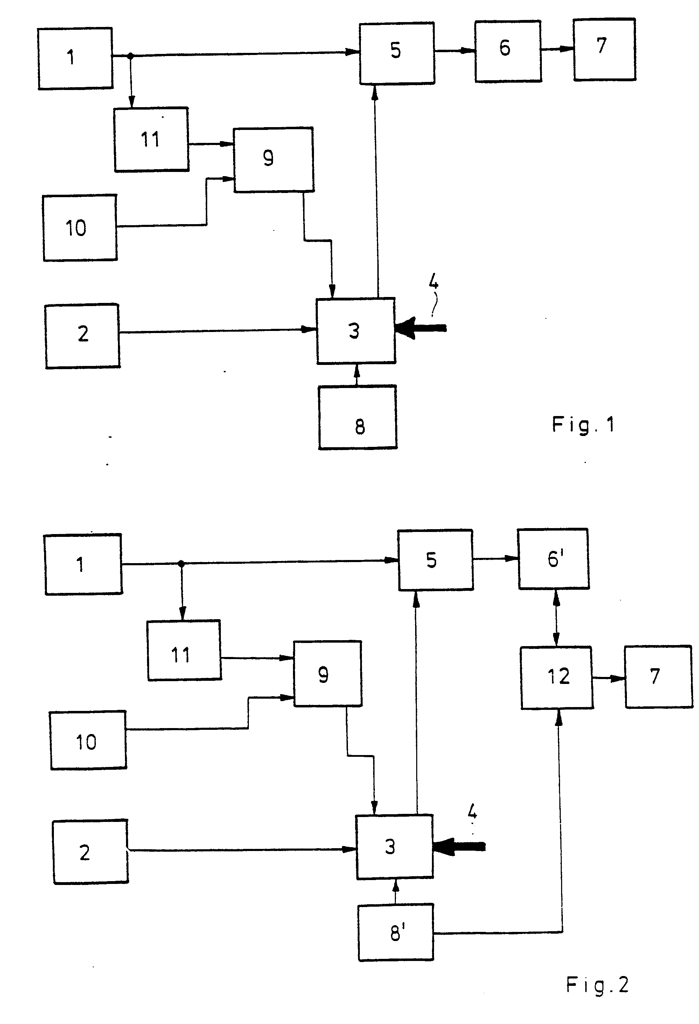

Wie aus Fig. 1 ersichtlich, ist die erfindungsgemäße Verbrauchsmeßvorrichtung mit einem Weg-Signalgeber 1 ausgestattet, welcher so angeordnet ist, daß er mit dem angetriebenen Rad des geprüften Fahrzeuges (nicht dargestellt) in Verbindung gebracht werden kann. Der Weg-Signalgeber kann beispielsweise als Lichtschranken-Weg-Signalgeber ausgeführt sein, welcher auf der Achse der Meßrolle (nicht dargestellt) des Rollenprüfstandes angeordnet ist. Der Weg-Signalgeber 1 ist fähig, pro Umdrehung mehrere Signale zu geben, z. B. pro 50-150 mm der abgerollten Strecke.

In die Kraftstoffzufuhrleitung vor der gemischbildenden Einrichtung (nicht dargestellt) ist ein Verbrauchsmesser 2 eingebaut, welcher mit einem bekannten elektrischen Signalgeber ausgestattet ist. Während der Experimente wurde ein solcher Verbrauchsmesser 2 angewandt, welcher beispielsweise pro 10 $cm^3$ des verbrauchten Kraftstoffvolumens ein elektrisches Signal abgab.

Der Signalgeber des dargestellten Verbrauchsmessers 2 steht mit einer Meß-Steuerschaltung 3 in Verbindung, welche mit einer Start-Taste 4 versehen ist. Die Meß-Steuerschaltung 3 ist eine an sich bekannte Logikschaltung, welche die Aufgabe hat, das Startsignal zu speichern und damit bereit ist, das folgende Verbrauchssignal des Verbrauchsmessers 2 aufzunehmen.

Der Ausgang der Meß-Steuerschaltung 3 ist an einen der Eingänge einer Torschaltung 5 angeschlossen. Der andere Eingang der Torschaltung 5 ist mit dem Weg-Signalgeber 1 verbunden, sein Ausgang dagegen ist über eine Zählerschaltung 6 mit einer Anzeigeeinrichtung 7 verbunden. Die Torschaltung 5 ist eine an sich bekannte Logikschaltung, welche als « Ventil » funktioniert.

Im vorgegebenen Fall steht die Meß-Steuerschaltung 3 mit einem Meßbereichswandler 8 in Verbindung, dessen Stufenschalter Anzeigen zugeordnet sind, mit deren Hilfe sich der Bediener darüber informieren kann, in welcher Meßstufe der Kraftstoffverbrauch der verschiedenen Fahrzeuge innerhalb der Gesamtgenauigkeit der Vorrichtung gemessen wird.

Der Meß-Steuerschaltung 3 weist einen weiteren Eingang für eine Sperrschaltung 9 auf, welche ihrerseits über Eingänge zum Anschluß einer Öltemperaturmesseinrichtung 10 bzw. einer Geschwindigkeitsmeß-Schaltung 11 verfügt. Der Eingang der Geschwindigkeitsmeß-Schaltung 11 ist an den Ausgang des Weg-Signalgebers 1 angeschlossen.

Die Geschwindigkeitsmeß-Schaltung 11 mißt (auf bekannte Weise) die Umdrehungszahl der Meßrolle und leitet davon den Umfangs-Geschwindigkeitswert ab.

Die Messung wird folgenderweise durchgeführt :

Mit Druck auf die START-Taste 4 beginnt die Meß-Steuerschaltung 3 die Steuerung und falls die Sperrschaltung 9 die Messung nicht verhindert, öffnet die Torschaltung 5 beim Eintreffen des ersten Verbrauchssignals und ermöglicht, daß die Zählerschaltung 6 die Wegsignale zählt.

Das den am Meßbereichwandler 8 im voraus eingestellten Volumenwerten zugeordnete letzte Verbrauchssignal schließt über die Meß-Steuerschaltung 3 die Torschaltung 5. Auf diese Weise ist die Anzahl der in die Zählerschaltung 6 bis zu diesem Zeitpunkt eingetroffenen Wegimpulse auf der Anzeigeeinrichtung 7 abzulesen.

Die Anzeigeeinrichtung 7 stellt sich automatisch bei Beginn der nächstfolgenden Messung auf Null zurück.

Der Kraftstoffverbrauch des mit der Ausführung gemäß Fig. 1 geprüften Fahrzeuges ist mit Hilfe eines Nomogramms auswertbar, da der in l/100 km dargestellte Verbrauch aus folgendem Zusammenhang berechenbar ist :

$$B = n \cdot V \cdot K/s$$

wobei

n — die Anzahl der durch den Signalgeber des Verbrauchsmessers angegebenen Volumeneinheiten

V — die Größe einer einzigen Kraftstoffvolumeneinheit

K — Umrechnungskonstante

s — die Anzahl der Wegimpulse im Zeitraum der Messung.

Die Sperrschaltung 9 verhindert bei Abweichung des Motorzustandes vom vorgeschriebenen die Durchführung der Messung. Beispielsweise verbietet sie die Messung, wenn die in die Bohrung des Ölmeßstabes eingeführte Öltemperaturmeßeinrichtung 10 eine niedrigere Schmieröltemperatur als die Betriebstemperatur anzeigt, oder wenn das aus dem Signal der Geschwindigkeitsmeßschaltung 11 gebildete Beschleunigungssignal den vorgeschriebenen Wertbereich überschreitet.

Eine weitere Ausführungsform der erfindungsgemäßen Vorrichtung, welche eine direkte Verbrauchsauswertung durchführt, ist in Fig. 2 dargestellt. Diese Ausführungsform unterscheidet sich von der gemäß Fig. 1 darin, daß der Meßbereichswandler über seine oben dargestellte Aufgabe hinaus eine dem ausgewählten Bereich zugeordnete Konstante (C = n. V. K) als Kennwert auswählt. Deshalb wurde hier der Meßbereichswandler mit dem Bezugszeichen 8' gekennzeichnet. Ein weiterer Unterschied ist, daß die Zählerschaltung 6' mit einem Datenspeicher versehen ist, welcher über eine zwischengeschaltete Teilerschaltung 12 an die Anzeigeeinrichtung 7 angeschlossen ist. Die Teilerschaltung 12 führt die Operation

$$B = C/s \text{ aus.}$$

Nach der automatischen Beendigung der Messung erscheint der aus dem Wert C und aus der im Datenspeicher der Zählerschaltung 6 erscheinenden Zahl der Wegimpulse (s) berechnete Verbrauch (B) in Liter/100 km auf der Anzeigeeinrichtung 7.

Experimente mit den dargestellten Ausführungsbeispielen der Vorrichtung haben bewiesen, daß diese eine wesentlich genauere Messung ermöglicht, als die bekannten Vorrichtungen. Das ergibt sich einerseits aus der automatischen Steuerung und Ergebnisbestimmung, andererseits aus folgendem :

der Fühler des Verbrauchsmessers 2 kann mit minimaler Verbindungsrohrlänge (200-300 mm) direkt im Motorraum angeordnet werden, so ändert sich der Zufuhrdruck, welcher in die gemischbildende Einrichtung gelangt, nicht nachweisbar. Auf diese Weise ist auch der Kraftstoffverbrauch von Fahrzeugen mit Fallbenzintank oder mit Kurbelgehäuse-Druckänderung arbeitenden Zufuhrpumpen (ohne Änderung des Niveaus des Schwimmergehäuses) mit großer Genauigkeit meßbar.

Die vorgeschlagene Vorrichtung ist fähig, zu kleinen Wegstrecken gehörende Wegsignale zu verarbeiten, so sind außerordentlich kurze, die Zurücklegung einer Strecke von 50-100 mm anzeigende Wegimpulse anwendbar. Da die Gesamtgenauigkeit der Vorrichtung von der Genauigkeit des Verbrauchsmessers und von dem Wegmessungsfehler von mindestens zwei Wegsignalen abhängt, ist mit der erfindungsgemässen Anlage bei einer Wegstrecke von 20-60 m die Messung mit einer Gesamtgenauigkeit von ± 1 - 1,5 % durchführbar. Dadurch wird der Zeitraum der Messung wesentlich verkürzt, wodurch die Einhaltung eines konstanten Motorbetriebszustandes einfach zu realisieren ist.

Die Kraftstoffverbrauchsmessung kann ferngesteuert werden, so daß das Bedienpersonal gegen Schallschäden geschützt werden kann.

**Patentansprüche**

1. Vorrichtung zur Kraftstoffverbrauchsmessung von Fahrzeugen auf einem Rollenprüfstand, welche einen Weg-Signalgeber (1), der mit dem angetriebenen Rad des Fahrzeugs in Verbindung gebracht werden kann, sowie einen mit einem Signalgeber zur Erzeugung eines Öffnungs-Verbrauchssignals und eines Schließ-Verbrauchssignals, die ein vorbestimmtes Kraftstoffvolumen definieren, ausgestatteten Verbrauchsmesser (2), welcher vor die gemischbildende Einrichtung in die Kraftstoffzufuhrleitung einbaubar ist, aufweist, wobei der Ausgang des Signalgebers des Verbrauchsmessers (2) über eine mit einer Start-Taste (4) versehene Meß-Steuerschaltung (3) mit einem Eingang einer Torschaltung (5) in Verbindung steht, der Ausgang des Weg-Signalgebers (1) mit dem anderen Eingang der Torschaltung (5) in Verbindung steht, wobei die Torschaltung (5) aufgrund von Signalen der Meß-Steuerschaltung (3), die auf das Öffnungs- und Schließ-Verbrauchssignal zurückgehen, in dem zwischen Öffnungs- und Schließ-Verbrauchssignal liegenden kurzen Zeitraum für Signale des Weg-Signalgebers (1) durchgeschaltet wird, die kleinen Wegstrecken entsprechen, und der Ausgang der Torschaltung (5) über eine Zählerschaltung (6, 6') mit einer Anzeigeeinrichtung (7) in Verbindung steht.

2. Vorrichtung nach Anspruch 1, bei der die Meß-Steuerschaltung (3) mit einem Meßbereichswandler (8, 8') in Verbindung steht.

3. Vorrichtung nach Anspruch 1 oder 2, bei der die Meß-Steuerschaltung (3) mit einem weiteren Eingang zum Anschluß des Ausgangs einer Sperrschaltung (9) versehen ist, die Sperrschaltung (9) über Eingänge zum Anschluß des Ausgangs einer Öltemperatur-Meßeinrichtung (10) und des Ausgangs einer Geschwindigkeitsmeßschaltung (11) verfügt, wobei der Eingang der Geschwindigkeitsmeßschaltung (11) an den Ausgang des Weg-Signalgebers (1) angeschlossen ist.

4. Vorrichtung nach Anspruch 2 oder 3, bei der die Zählerschaltung (6') mit einem Datenspeicher ergänzt ist sowie über eine Teilerschaltung (12) mit der Anzeigeeinrichtung (7) in Verbindung steht, des weiteren der Meßbereichswandler (8') mit einer Konstanten-Wähleinheit versehen ist, deren Ausgang an den Eingang der Teilerschaltung (12) angeschlossen ist, wobei die Teilerschaltung (12) den Quotienten aus einer am Meßbereichswandler (8') gewählten Konstanten und dem Ausgang der Zählerschaltung (6') bildet.

5. Hohe Genauigkeit aufweisendes Verfahren zur Messung des Kraftstoffverbrauchs eines Fahrzeugs auf einem Rollenprüfstand mit folgenden Verfahrensschritten :

a) Erzeugung von Wegsignalen, die kleinen abgerollten Wegstrecken entsprechen,

b) Zuführen der Wegsignale zu einem Eingang einer Torschaltung (5),

c) Betätigen einer Start-Taste (4),

d) Erzeugen eines Öffnungs-Verbrauchssignals und eines Schließ-Verbrauchssignals, die ein vorbestimmtes Kraftstoffvolumen definieren,

e) Öffnen der Torschaltung (5) aufgrund des Öffnungs-Verbrauchssignals,

f) Schließen der Torschaltung (5) aufgrund des Schließ-Verbrauchssignals,

g) Zählen der durch die geöffnete Torschaltung (5) in dem zwischen Öffnungs- und Schließ-Verbrauchssignal liegenden kurzen Zeitraum kommenden Wegsignale und

h) Anzeigen eines der Zahl der gezählten Wegsignale zugeordneten Wertes.

## Claims

1. Device for measuring the fuel consumption of vehicles on a roller-type testing stand, comprising a path length signalling device (1) adapted to be coupled to the driven wheel of the vehicle, and a consumption measuring device (2) equipped with signalling means for generating a start of consumption signal and an end of consumption signal defining a predetermined fuel volume, said device (2) being adapted to be installed in the fuel line upstream of the device forming the mixture, with the output of the signalling means of the consumption measuring device (2) being connected to one input of a gating circuit (5) through a measuring controll circuit (3) provided with a start key (4), the output of path length signalling device (1) being connected to the other input of the gating circuit (5) with the gating circuit (5) due to signals of the measuring control circuit (3) which are derived from the consumption start and end signal within the short time period between the consumption start and end signal being switched for signals of the path length signalling device (1) which correspond to short path lengths and the output of gating circuit (5) being connected to display means (7) through a counting circuit (6, 6').

2. Device as in claim 1, wherein the measuring control circuit (3) is connected to measuring range converting means (8, 8').

3. Device as in claim 1 or 2, wherein the measuring control circuit (3) is provided with another input coupled to the output of a blocking circuit (9) having inputs coupled to the outputs of an oil temperature measuring means (10) and of a speed measuring circuit (11), respectively, with the input of the speed measuring circuit (11) being connected to the output of the path length signalling device (1).

4. Device as in claim 2 or 3, wherein the counting circuit (6') has associated therewith a data memory means and is connected through a dividing circuit (12) of the display means (7), with the measuring range converting means (8') being provided with a constant selection unit having its output connected to the input of the dividing circuit (12) and wherein the dividing circuit (12) forming the quotient of a constant selected at the measuring range converting means (8') and of the output of the counting circuit (6').

5. High precision process for measuring the fuel consumption of a vehicle on a roller-type testing stand, comprising the following steps :

a) generating path length signals corresponding to short unrolled path lengths,

b) coupling the path length signals to an input of a gating circuit (5),

c) actuating a start key (4),

d) generating a consumption start signal and a consumption end signal defining a predetermined fuel volume,

e) opening the gating circuit (5) on the basis of the consumption start signal,

f) closing the gating circuit (5) on the basis of the consumption end signal,

g) counting the path length signals coming through the opened gating circuit (5) within the short time period between the consumption start and end signals, and

h) displaying a value associated with the number of said counted path length signals.

## Revendications

1. Dispositif pour la mesure de la consommation en carburant de véhicules sur un banc d'essai à rouleaux et qui comprend un émetteur de signal de parcours (1) accouplable à une roue motrice du véhicule ainsi qu'un mesureur de consommation (2) équipé d'un générateur de signal qui produit des signaux de début et de fin de consommation définissant un volume prédéterminé de carburant et qui peut être associé à la canalisation d'alimentation en carburant en amont de l'installation élaborant le mélange où la sortie du générateur de signal du mesureur de consommation (2) est reliée à une entrée d'un circuit porte (5) par l'entremise d'un circuit de commande-mesure (3) pourvu d'un bouton de mise en marche (4), où la sortie de l'émetteur de signal de parcours (1) est reliée à l'autre entrée du circuit porte (5) et où le circuit porte (5) est commuté pour des signaux de l'émetteur de signal de parcours (1) correspondant à de petites distances dans la brève durée entre les signaux de début et de fin de consommation en fonction des signaux du circuit de commande-mesure (3) qui renvoient aux signaux de début et de fin de consommation et où la sortie du circuit porte (5) est reliée à un indicateur (7) par l'intermédiaire d'un compteur (6, 6').

2. Dispositif selon la revendication 1 où le circuit de commande-mesure (3) est associé à un chargeur de gamme de mesure (8, 8').

3. Dispositif selon la revendication 1 ou 2 où le circuit de commande-mesure est pourvu d'une entrée supplémentaire pour le raccordement de la sortie d'un circuit de blocage (9) dont les entrées sont connectées à la sortie d'un mesureur de température d'huile (10) et à celle d'un vélocimètre (11) dont l'entrée est reliée à la sortie de l'émetteur de signal de parcours (1).

4. Dispositif selon la revendication 2 ou 3 où le compteur (6') est complété par un accumulateur de données et est connecté à l'indicateur (7) par l'entremise d'un circuit diviseur (12), où en outre le chargeur de gamme de mesure (8') est pourvu d'une entité de choix de constantes dont la sortie est reliée à l'entrée du circuit diviseur (12) de manière que ce dernier établisse le quotient de la valeur d'une constante choisie avec le chargeur de gamme de mesure (8') et de la valeur de la sortie du compteur (6').

5. Procédé de mesure de la consommation en carburant d'un véhicule sur un banc d'essai à rouleaux offrant une grande précision et comprenant les phases suivantes :

a) émission de signaux de parcours représentatifs de petites distances parcourues

b) acheminement des signaux de parcours à l'entrée d'un circuit porte (5)

c) actionnement d'un bouton de mise en marche (4)

d) génération de signaux de début et de fin de consommation qui définissent un volume prédéterminé de carburant

e) commutation du circuit porte (5) en fonction du signal de début de consommation

f) basculement du circuit porte (5) en fonction du signal de fin de consommation

g) comptage des signaux de parcours en provenance du circuit porte (5) commuté pendant la brève durée entre les signaux de début et de fin de consommation et

h) affichage d'une valeur correspondant au nombre des signaux de parcours décomptés.

1
5
6
7
11
9
10
4
2
3
8
Fig. 1

1
5
6'
11
9
12
7
10
4
2
3
8'
Fig. 2